# FASCICULE DE BREVET EUROPEEN

(11) **EP 4 047 755 B1**
(45) Date de publication et mention de la délivrance du brevet: **05.07.2023**
(21) Numéro de dépôt: 22156935.3
(22) Date de dépôt: 16.02.2022
(51) Int. Cl.: H01R 9/24, B60L 50/00, H01B 7/30, H02G 3/22, H01R 31/06, H01R 103/00, H02G 5/00

(54) **CONNECTEUR ÉLECTRIQUE, SYSTÈME ÉLECTRIQUE COMPRENANT UN TEL CONNECTEUR ET VÉHICULE FERROVIAIRE COMPRENANT UN TEL SYSTÈME**
ELEKTRISCHER ANSCHLUSS, ELEKTRISCHES SYSTEM, DAS EINEN SOLCHEN ANSCHLUSS UMFASST, UND SCHIENENFAHRZEUG MIT EINEM SOLCHEN SYSTEM
ELECTRICAL CONNECTOR, ELECTRICAL SYSTEM COMPRISING SUCH A CONNECTOR AND RAILWAY VEHICLE COMPRISING SUCH A SYSTEM

(30) Priorité: 17.02.2021 FR 2101528
(43) Date de publication de la demande: 24.08.2022
(73) Titulaire: ALSTOM Holdings, 93400 Saint-Ouen-sur-Seine (FR)
(72) Inventeur: RUCQUOY, Ludovic, 6041 Gosselies (BE); FERRARA, Vito, 6001 Marcinelle (BE)
(74) Mandataire: Lavoix

(56) Documents cités:
- FR-A- 1 423 398
- JP-A- 2005 204 417
- US-A- 5 694 301
- US-A1- 2019 237 440

## Description

La présente invention concerne un connecteur électrique, configuré pour relier entre eux deux appareils électriques avec chacun au moins deux bornes de connexion. L'invention concerne aussi un système électrique comprenant un tel connecteur électrique, ainsi qu'un véhicule ferroviaire comprenant un tel système électrique.

Dans le domaine des convertisseurs de puissance, notamment le domaine des convertisseurs de puissance embarqués sur des véhicules ferroviaires, il est connu d'avoir des appareils électriques connectés entre eux pour assurer la conversion de l'énergie électrique reçue d'une source extérieure, telle qu'une caténaire, en une énergie utilisable par d'autres équipements du véhicule ferroviaire. Certains appareils électriques, situées par exemple sur le toit du véhicule ferroviaire, peuvent être exposés aux intempéries sans demander de protection particulière, alors que d'autres appareils, plus sensibles, doivent faire l'objet d'une protection spécifique contre l'eau et/ou la poussière. Plus généralement, de tels appareils électriques peuvent faire l'objet de différentes mesures de protection contre l'eau et/ou la poussière. Pour faciliter l'accès à ces appareils électriques, notamment lors d'opérations de maintenance, une structure modulaire des convertisseurs de puissance est préférée. Les appareils électriques sont alors logés dans plusieurs compartiments différents, chaque compartiment offrant un niveau de protection adapté aux appareils électriques qui y sont logés, et les appareils électriques sont séparés par des cloisons étanches tout en étant conjointement raccordés électriquement entre eux, ce raccordement étant réversible.

Il est connu d'utiliser des connecteurs comprenant une tige conductrice noyée dans un bloc de matière isolante rigide, telle qu'une matière plastique polymère. La tige conductrice est reliée aux appareils électriques de part et d'autre d'une cloison et présente une section adaptée à l'intensité électrique transportée. Le bloc de matière isolante est monté de façon étanche sur la cloison à l'aide d'organes d'étanchéité.

Cependant, les appareils de conversion électrique opèrent aujourd'hui à des fréquences plus élevées, par exemple supérieures à 10 kHz, afin de limiter les pertes d'énergie lors de la conversion. Dans ces domaines de fréquences dits « de moyenne fréquence » entre 10 kHz et 150 kHz, les conducteurs électriques sont soumis à un effet dit « effet de peau », c'est à dire que les électrons ne transitent plus que dans une couche superficielle des conducteurs, ce qui réduit la section utile des conducteurs électriques, engendre des échauffements et dégrade les performances des convertisseurs de puissance. De plus, lorsque deux conducteurs distincts sont placés à proximité l'un de l'autre et parcourus par un même courant, de même sens, un effet dit « effet de proximité » se rajoute à l'effet de peau limitant d'autant plus la section utile des conducteurs électrique

Il est connu d'utiliser, pour limiter l'effet de peau, des câbles regroupant plusieurs fils torsadés de petite section et isolés entre eux. De tels câbles sont parfois appelés « fils de Litz ». Pour traverser une cloison étanche, les extrémités des fils de Litz sont chacune serties sur une embout spécifique, l'étanchéité de la traversée de cloison étant assurée par un embout complémentaire monté sur un presse étoupe. Ces embouts présentent une structure complexe et sont relativement fragiles, tandis que le montage et le démontage d'un tel système, par exemple lors d'une opération de maintenance, est consommateur de temps, les fils de Litz étant, en outre, plus encombrants et plus fragiles que les câbles classiques.

FR-1 423 398-A décrit, par exemple, des électrodes de machines de soudure qui comprennent des bandes conductrices, qui sont associées par paires et qui comprennent chacune une portion centrale et des pattes de connexions réparties sur des côtés opposés de la portion centrale. Les portions centrales sont superposées et sont superposées et séparées par des feuilles isolantes. Les électrodes sont exposées, aucun dispositif d'étanchéité particulier n'étant prévu.

Cette configuration se retrouve également dans JP2005-204417-A, US5694301-A ou US2019/237440-A1, lesquels divulguent différentes applications pour connecter des électrodes entre elles, sans dispositif d'étanchéité.

C'est à ces problèmes qu'entend plus particulièrement remédier l'invention, en proposant un connecteur électrique robuste, qui permette un passage de cloison étanche, une connexion et une déconnexion facile avec des bornes d'appareils électriques, tout en limitant les effets de peau et de proximité lors d'un fonctionnement à certaines fréquences.

À cet effet, l'invention concerne un système électrique, comprenant un premier appareil électrique et un deuxième appareil électrique séparés par une cloison étanche parallèle à un plan transversal, chacun des premier et deuxième appareils comprenant au moins deux bornes de connexion, le premier appareil électrique étant relié électriquement au deuxième appareil électrique par l'intermédiaire d'un connecteur électrique, dans lequel le connecteur électrique comporte une paire de plaques, comprenant une première plaque électriquement conductrice et une deuxième plaque électriquement conductrice. Chaque plaque comporte une partie centrale et deux pattes de connexion. Les pattes de connexion de chaque plaque s'étendent longitudinalement dans le prolongement de la partie centrale depuis des bords opposés de la partie centrale, les bords opposés étant des portions du contour de la partie centrale, situées de part et d'autre du plan transversal, les pattes de connexion de chaque plaque étant décalées latéralement l'une par rapport à l'autre. Les première et deuxième plaques sont empilées l'une sur l'autre, les parties centrales étant superposés et séparées par un espacement. Les pattes de connexion des première et deuxième plaques sont, du côté de chacun desdits bords opposés, décalées latéralement l'une par rapport à l'autre. Le connecteur électrique comporte, en outre, une structure d'isolement comprenant une couche intercalaire d'un matériau électriquement isolant logé dans un espacement entre les parties centrales des première et deuxième plaques.

Selon l'invention, le connecteur électrique est configuré pour coopérer avec des organes d'étanchéité de manière à traverser la cloison de façon étanche, deux des bornes du premier appareil étant connectées à deux des bornes de connexion du connecteur électrique situées de l'un des côtés de la cloison correspondante, tandis que deux des bornes du deuxième appareil sont connectées à deux des bornes de connexion du connecteur électrique situées de l'autre des côtés de cette cloison.

Grâce à l'invention, les effets de peau sont réduits grâce aux éléments conducteurs ménagés dans une plaque. Les pattes de connexion peuvent être raccordées à tout type de câble ou de barre de connexion, sans être limité à des câbles de Litz. Le montage et le démontage sont aisés. La configuration croisée des pattes de connexions d'un élément conducteur, associée à la configuration alternée des pattes de connexions de deux éléments conducteurs consécutifs, minimise les effets de proximité, réduit l'inductance de la connexion et donc réduit les pertes électriques.

Plusieurs paires d'éléments conducteurs sont prévues en fonction de la puissance électrique transitant par le connecteur électrique.

Selon des aspects avantageux mais non obligatoires de l'invention, un tel système électrique peut incorporer une ou plusieurs des caractéristiques suivantes prises selon toute combinaison techniquement admissible :
- le connecteur électrique comprend au moins une deuxième paire de plaques, comprenant une troisième plaque et une quatrième plaque électriquement conductrices, chaque plaque de la deuxième paire comportant une partie centrale et deux pattes de connexion. Les pattes de connexion de chaque plaque s'étendent longitudinalement dans le prolongement de la partie centrale depuis des bords opposés de la partie centrale en étant décalées latéralement l'une par rapport à l'autre. Les troisième et quatrième plaques sont empilées l'une sur l'autre, les parties centrales étant superposés et séparées par un espacement. Les pattes de connexion des troisième et quatrième plaques sont, du côté de chacun des bords opposés, décalées latéralement l'une par rapport à l'autre Toutes les plaques du connecteur électrique sont empilées les unes sur les autres, toutes les parties centrales étant superposées, alors que la structure d'isolement comprend des couches intercalaires d'un matériau électriquement isolant logées dans chaque espacement entre deux parties centrales immédiatement voisines, et que pour deux plaques immédiatement voisines, les pattes de connexion situées du côté d'un des bords opposés sont décalées latéralement l'une par rapport à l'autre.
- Toutes les pattes de connexion situées du côté d'un des bords opposés et appartenant à des plaques séparées entre elles par un nombre impair de plaques sont superposées et sont électriquement reliées entre elles par des organes de liaison.
- La structure d'isolement comprend un corps, qui reçoit conjointement les parties centrales de chaque plaque, le corps étant réalisé par surmoulage des parties centrales des plaques, en un matériau électriquement isolant, seules les pattes de connexion dépassant en saillie du corps.
- La structure d'isolement est réalisée d'une seule pièce, en un matériau polymère.
- La structure d'isolement est configurée pour coopérer avec des organes d'étanchéité, de manière à séparer entre elles de façon étanche les pattes de connexions situées du côté de bords opposés.
- Les plaques présentent une structure identique les unes aux autres.
- Les plaques sont réalisées en métal avec une épaisseur comprise entre 0,1 mm et 5 mm, de préférence entre 0,5 mm et 2 mm, le métal étant de préférence choisi parmi le cuivre et ses alliages ou l'aluminium et ses alliages.

Selon un autre aspect, l'invention concerne un véhicule ferroviaire, qui comprend un système électrique tel que décrit précédemment.

L'invention sera mieux comprise et d'autres avantages de celle-ci apparaîtront plus clairement à la lumière de la description qui va suivre, d'un mode de réalisation d'un connecteur électrique, d'un sous-ensemble de traitement d'électricité comprenant un tel connecteur électrique et d'un véhicule ferroviaire comprenant un tel sous-ensemble de traitement de d'électricité, donnée uniquement à titre d'exemple et faite en référence aux dessins annexés, dans lesquels :
- [Fig 1] la figure 1 est une vue schématique d'un dispositif comprenant un système électrique avec un connecteur électrique conformes à l'invention ;
- [Fig 2] la figure 2 est une vue en perspective d'un connecteur électrique, conforme à l'invention, appartenant au système électrique de la figure 1, certains éléments étant omis pour faciliter la lecture, et
- [Fig 3] la figure 3 est une vue schématique d'un détail du dispositif de la figure 1, repéré par un cadre III sur la figure 1, comprenant le connecteur électrique de la figure 2.

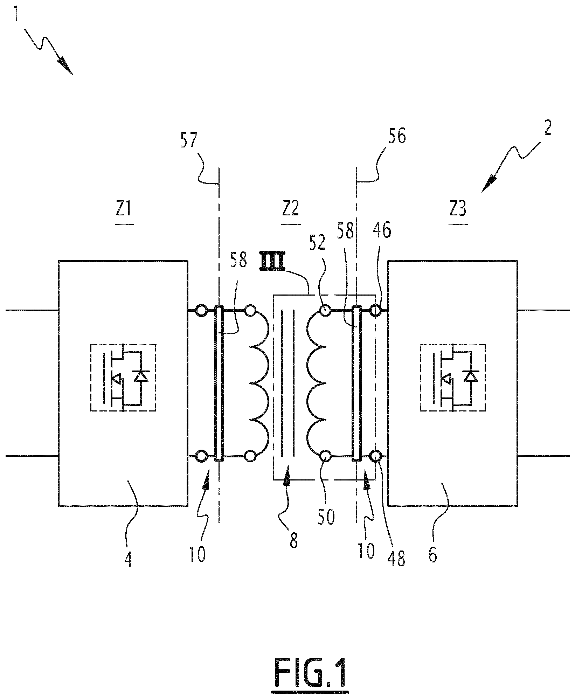

La figure 1 représente un système électrique 1. Le système électrique 1 peut être intégré dans un véhicule ferroviaire. Le système électrique 1 comprend un convertisseur électrique 2, qui est un exemple de système électrique. Le convertisseur électrique 2 est conçu pour convertir l'énergie électrique captée depuis une source extérieure, par exemple une caténaire, en une énergie électrique utilisable par les autres équipements électriques du système 1.

Le convertisseur 2 comprend un premier circuit électrique 4, un deuxième circuit électrique 6 et un transformateur 8. Les premier circuit 4, deuxième circuit 6 et transformateur 8 sont représentés schématiquement sur la figure 1.

Les premier et deuxième circuits 4 et 6 présentent chacun deux bornes de connexion, alors que le transformateur 8 comprend deux bobines situées autour d'un noyau ferromagnétique, chacune des bobines comprenant deux bornes de connexion. L'une des deux bobines du transformateur 8 est raccordée au premier circuit 4 par un connecteur électrique 10, l'autre bobine du transformateur 8 étant raccordée au deuxième circuit 6 par un autre connecteur électrique 10.

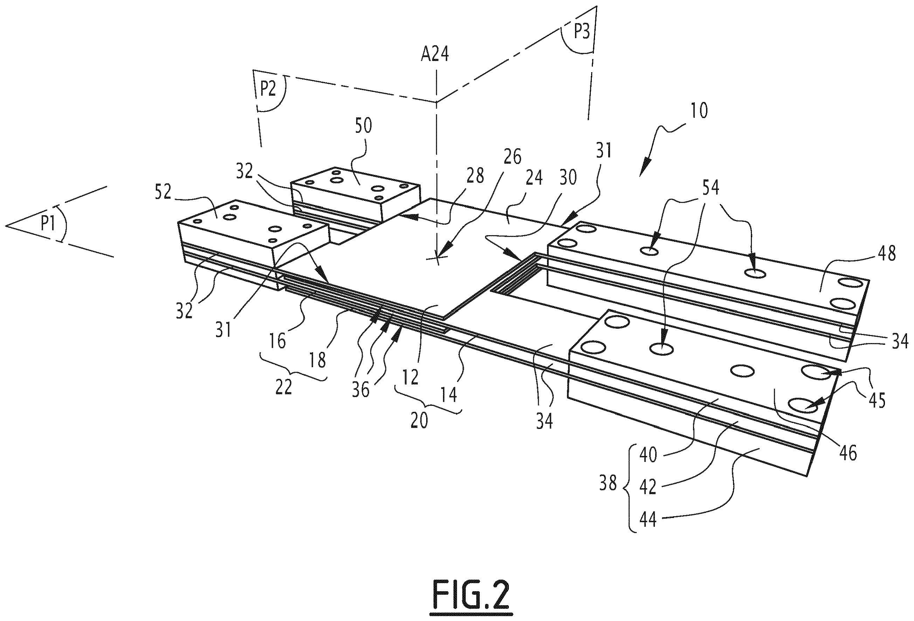

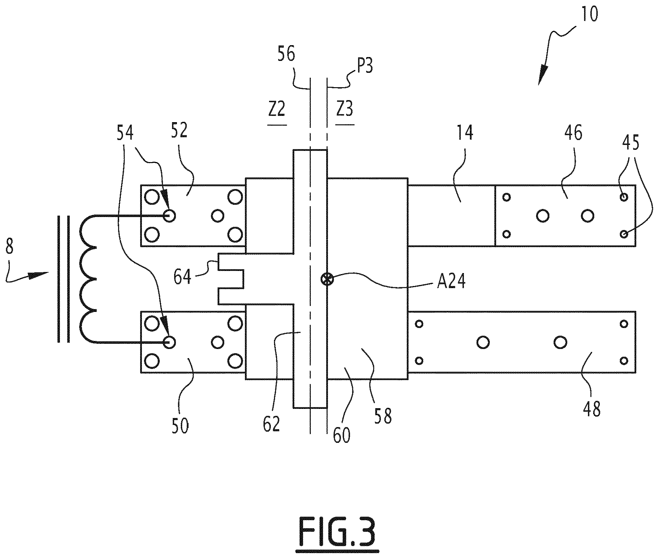

On comprend que chacun des connecteurs 10 est conjointement raccordé aux deux bornes de l'un des premier ou deuxième circuits électriques 4 ou 6 d'une part, et au deux bornes de l'une des bobines respectives du transformateur 8 d'autre part. Sur la figure 1, les connecteurs électriques 10 sont représentés de manière schématique. En particulier, le branchement des bornes de connexions des premier et deuxième circuits 4 et 6 n'est pas détaillé sur la figure 1. Le branchement des bornes de connexions des premier et deuxième circuits 4 et 6 se déduit de la structure des connecteurs électriques 10, détaillée plus loin dans la présente description, notamment à l'aide des figures 2 et 3.

Les premier ou deuxième circuits électriques 4 ou 6 sont des exemples d'un premier appareil électrique comprenant au moins deux bornes, tandis que le transformateur 8 est un exemple de deuxième appareil électrique comprenant au moins deux bornes.

Le premier circuit 4, le transformateur 8 et le deuxième circuit 6 sont chacun soumis à des contraintes de protection environnementale différentes. Ces contraintes de protection peuvent concerner l'eau et/ou la poussière et sont souvent indiquées sous la forme d'un indice de protection normalisé, dit « indice IP », par exemple défini par la norme IEC60529. L'indice IP est généralement accompagné de deux chiffres, relatifs respectivement à la protection contre les solides et contre l'eau.

Ainsi, dans l'exemple de la figure 1 donné à des fins d'illustration, les premier et deuxième circuits 4 et 6 sont soumis à une contrainte de protection dite IP65, tandis que le transformateur 8 est soumis à une contrainte de protection dite IP20.

Pour assurer un niveau de protection conforme aux indices IP requis, les premier circuit 4, deuxième circuit 6 et transformateur 8 sont chacun placés dans des zones respectives Z1, Z3 et Z2 qui délimitent des volumes dans lesquels les indices de protection IP correspondants sont maintenus, par des moyens externes non détaillés.

Pour maintenir les niveaux de protection adéquats dans chacune des zones Z1 à Z3, les zones Z1, Z2 et Z3 sont séparées par des cloisons étanches. Les zones Z2 et Z3 sont séparées par une cloison 56, tandis que les zones Z1 et Z2 sont séparées par une cloison 57. Les cloisons 56 et 57 sont représentées schématiquement par des traits mixtes sur les figures 1 et 3.

Chacun des connecteurs 10 est conçu pour être raccordé, au travers d'une des cloisons 56 ou 57, à deux appareils électriques respectifs comportant chacun au moins deux bornes respectives. Chacun des connecteurs 10 comprend ainsi une structure d'isolement 58, qui coopère avec des organes d'étanchéité et/ou de fixation pour assurer le maintien mécanique du connecteur électrique 10 par rapport à la cloison 56 ou 57 respective. Les organes d'étanchéité et/ou de fixation ne sont pas représentés sur les figures.

Par exemple, les au moins deux bornes desdits appareils électriques correspondent à des polarités, ou phases en cas de signal alternatif, les polarités étant liées à la conception et au fonctionnement desdits appareils électriques.

Dans l'exemple illustré, l'un des connecteurs 10, situé à gauche sur la figure 1, relie le premier circuit 4, situé dans la zone Z1, à un bobinage primaire du transformateur 8 situé dans la zone Z2, tandis que l'autre des connecteurs 10, situé à droite sur la figure 1, relie un bobinage secondaire du transformateur 8, placé dans la zone Z2, au deuxième circuit 6 situé dans la zone Z3. L'un des connecteurs 10 de l'exemple relie ainsi deux bornes du premier circuit 4 aux deux polarités correspondantes du bobinage primaire du transformateur 8, tandis que l'autre des connecteurs 10 relie deux bornes du deuxième circuit 6 aux deux polarités correspondantes du bobinage secondaire du transformateur 8.

Chaque connecteur 10 comprend quatre bornes de connexion, référencées 46, 48, 50 et 52, qui sont solidaires de la structure d'isolement 58.

La structure interne du connecteur électrique 10 est détaillée dans ce qui suit.

Les deux connecteurs électriques 10 représentés sur la figure 1 présentent la même structure et fonctionnent de la même façon. La description qui suit est faite en référence au connecteur 10 de droite sur la figure 1.

Les bornes 46 et 48 sont chacune raccordées à une borne respective du deuxième circuit 6, tandis que les bornes 50 et 52 sont chacune raccordées à une borne respective du bobinage secondaire du transformateur 8.

Autrement dit, deux des bornes du deuxième circuit 6 sont reliées aux deux bornes de connexion 46 et 48 du connecteur 10 qui sont situées d'un même premier côté de la cloison 56, tandis que les deux bornes du transformateur 8 sont reliées aux deux bornes de connexion 50 et 52 du connecteur 10 qui sont situées d'un même deuxième côté de la cloison 56.

Les figures 2 et 3 représentent plus en détail un connecteur 10 selon des modes de réalisation.

Le connecteur 10 comprend au moins deux plaques électriquement conductrices. Avantageusement, le connecteur 10 comprend au moins quatre plaques électriquement conductrices, les plaques étant « croisées », c'est-à-dire que l'on intercale, entre deux plaques raccordées aux mêmes bornes, une autre plaque raccordée aux autres bornes. Le fait de croiser les plaques permet de réduire les effets de proximité entre les plaques et ainsi d'augmenter l'efficacité globale du connecteur 10, pour des raisons qui sont détaillées plus loin dans la présente description.

Dans cet exemple illustratif, le connecteur électrique 10 comporte quatre plaques électriquement conductrices référencées 12, 14, 16 et 18. Toutefois, en variante, le nombre de plaques peut être différent. On comprend donc que tout ce qui est décrit ici est transposable à ces modes de réalisation.

Les plaques 12 à 18 sont parallèles entre elles et sont parallèles à un plan géométrique longitudinal P1.

Les plaques 12 et 14 sont voisines l'une de l'autre, autrement dit sont consécutives l'une à l'autre, et définissent une première paire de plaques 20. La plaque 12 est ainsi une première plaque de la première paire 20, tandis que la plaque 14 est une deuxième plaque de la première paire 20. De façon analogue, les plaques 16 et 18 sont consécutives l'une de l'autre et définissent une deuxième paire de plaques 22. La plaque 16 est ainsi une première plaque de la deuxième paire 22, tandis que la plaque 18 est une deuxième plaque de la deuxième paire 22.

Les plaques 12 à 18 sont constituées d'un matériau électriquement conducteur.

Avantageusement, les plaques 12 à 18 sont en métal, tel que du cuivre ou de l'aluminium, ou un de leurs alliages respectifs, ou tout autre matériau approprié.

Avantageusement, les plaques 12 à 18 présentent une structure identique les unes aux autres.

Chaque plaque 12 à 18 comprend une partie centrale 24 qui est plane et définit un centre 26. Pour chaque partie centrale 24, on définit un axe A24 comme étant un axe orthogonal à la partie centrale 24 et passant par le centre 26. L'axe A24 est ainsi orthogonal au plan longitudinal P1.

Chaque partie centrale 24 présente un premier bord 28 et un deuxième bord 30, opposé au premier bord 28. Dans l'exemple illustré, la partie centrale 24 est de forme rectangulaire et comprend aussi des bords latéraux 31. Les bords latéraux 31 sont opposés et parallèles entre eux, tandis que les premier et deuxième bords 28 et 30 sont aussi parallèles entre eux.

On définit un plan géométrique médian P2 comme étant un plan orthogonal au plan longitudinal P1, passant par le centre 26 et étant orthogonal aux bords 28 et 30.

On définit aussi un plan géométrique transversal P3 comme étant un plan passant par le centre 26 et étant conjointement orthogonal aux plans P1 et P2. Le plan P3 est ainsi orthogonal aux bords latéraux 31.

En variante non représentée, la partie centrale 24 de chaque plaque 12 à 18 peut présenter une forme circulaire ou d'ellipse. Dans un tel cas, les bords opposés précédemment définis désignent alors des portions du contour de la partie centrale, situées de part et d'autre du plan transversal P3 et coupées par le plan médian P2. De façon analogue, les bords latéraux désignent alors les portions du contour de la partie centrale, situées de part et d'autre du plan médian P2 et coupées par le plan transversal P3.

Les plaques 12, 14, 16 et 18 sont empilées en étant séparées deux à deux par des espacements 36, comme expliqué ci-après. Autrement dit, aucune des plaques 12 à 18 n'est en contact électrique avec une plaque immédiatement voisine.

Par exemple, les parties centrales 24 de chaque plaque 12 à 18 sont superposées, les axes A24 de chaque plaque 12 à 18 étant confondus, et les bords 28 et 30 de chaque plaque 12 à 18 étant parallèles entre eux.

Avantageusement, tous les bords 28 des plaques 12 à 18 sont situés dans un même plan géométrique parallèle à l'axe A24. De façon analogue, tous les bords 30 sont aussi situés dans un même plan géométrique parallèle à l'axe A24. De façon analogue, tous les bords latéraux 31 situés d'un même côté du plan médian P2 sont aussi situés dans un même plan géométrique parallèle à l'axe A24. Ainsi, tel qu'illustré sur la figure 2, toutes les parties centrales 24 des plaques 12 à 18 sont contenues dans un cylindre de section rectangulaire et de génératrice parallèle à l'axe A24, ce qui donne au connecteur 10 une structure compacte tout en permettant de réduire les effets de proximité entre les plaques.

Les première et deuxième paires de plaques 20 et 22 sont ainsi superposées parallèlement à l'axe A24.

Chacune des plaques 12 à 18 comprend, en outre, une première patte de connexion 32 et une deuxième patte de connexion 34. Les pattes de connexion 32 et 34 sont conçues pour être connectées aux bornes des appareils électriques raccordés par le connecteur 10.

Les pattes de connexion 32 et 34 présentent, dans l'exemple illustré, une forme rectangulaire de largeur inférieure à la largeur de la partie centrale 24. Les pattes 34 sont plus longues que les pattes 32.

Pour chaque plaque 12 à 18, la patte de connexion 32 s'étend longitudinalement, depuis le premier bord 28, dans le prolongement de la partie centrale 24 et dans le prolongement de l'un des bords latéraux 31, tandis que la patte de connexion 34 s'étend, depuis le deuxième bord 30, longitudinalement dans le prolongement de la partie centrale 24 et dans le prolongement de l'un des bords latéraux 31.

Autrement dit, les pattes de connexion 32 et 34 de chaque plaque 12 à 18 s'étendent longitudinalement dans le prolongement de la partie centrale 24 de l'une des plaques 12 à 18 respectives, depuis les bords opposés 28 et 30.

Autrement dit les pattes de connexion 32 et 34 sont situées de part et d'autre du plan transversal P3.

Pour chaque plaque 12 à 18, les pattes 32 et 34 sont situées de part et d'autre du plan médian P2. Autrement dit, les pattes de connexion 32 et 34 sont décalées latéralement l'une par rapport à l'autre, suivant une direction orthogonale au plan médian P2.

Pour deux des plaques 12 à 18 consécutives quelconques, autrement dit pour les plaques 12 et 14, ou 14 et 16, ou 16 et 18 immédiatement voisines, les pattes de connexion 34 sont situées de part et d'autre du plan médian P2. Autrement dit, les pattes 34 sont décalées latéralement l'une par rapport à l'autre suivant une direction orthogonale au plan médian P2.

De façon analogue, les pattes de connexion 32 de deux plaques 12 à 18 immédiatement voisines sont aussi situées de part et d'autre du plan médian P2. Autrement dit, les pattes 32 sont décalées latéralement l'une par rapport à l'autre suivant une direction orthogonale au plan médian P2.

Plus généralement, pour deux des plaques 12 à 18 immédiatement voisines, les pattes de connexion 32 et 34 situées du côté d'un des bords opposés 28 et 30 respectifs, sont décalées latéralement l'une par rapport à l'autre, suivant une direction orthogonale au plan P2.

On comprend que les pattes 32 et 34 de la plaque 12, qui est la première plaque de la première paire 20, et les pattes 32 et 34 de la plaque 16, qui est la première plaque de la deuxième paire 22, sont respectivement superposées parallèlement à l'axe A24. Autrement dit, la première plaque 16 de la deuxième paire 22 est obtenue par translation parallèlement à l'axe A24 de la première plaque 12 de la première paire 20, et les premières plaques 12 et 16 des première et deuxième paires 20 et 22 sont séparées entre elles par la deuxième plaque 14 de la première paire 20.

De façon analogue, les pattes 32 et 34 de la plaque 14, qui est la deuxième plaque de la première paire 20, et les pattes 32 et 34 de la plaque 18, qui est la deuxième plaque de la deuxième paire 22, sont respectivement superposées parallèlement à l'axe A24. Autrement dit, la deuxième plaque 18 de la deuxième paire 22 est obtenue par translation parallèlement à l'axe A24 de la deuxième plaque 14 de la première paire 20, et les deuxièmes plaques 14 et 18 des première et deuxième paires 20 et 22 sont séparées entre elles par la première plaque 16 de la deuxième paire 20.

Deux parties centrales 24 immédiatement voisines définissent entre elles un espacement 36. Les espacements 36 ont chacun la forme d'un parallélépipède aplati, qui s'étend parallèlement au plan longitudinal P1.

Avantageusement, la structure d'isolement 58 comprend des couches intercalaires d'un matériau électriquement isolant, qui sont logées dans chacun des espacements 36 entre deux parties centrales 24 immédiatement voisines. Les couches intercalaires de la structure d'isolement 58 sont aptes à isoler électriquement entre elles les parties centrales 24 immédiatement voisines. Les couches intercalaires ne sont pas représentées pour faciliter la lecture des figures.

Avantageusement, les couches intercalaires logées dans les espacements 36 sont aptes à maintenir mécaniquement les parties centrales 24 voisines les unes par rapport aux autres.

Les pattes 32 situées d'un même côté du plan médian P2 sont superposées suivant une direction parallèle à l'axe A24.

De façon analogue, les pattes 34 situées d'un même côté du plan médian P2 sont superposées suivant une direction parallèle à l'axe A24.

Les pattes 32 et 34 qui sont superposées entre elles sont aussi reliées entre elles mécaniquement et électriquement par des organes de liaison 38.

Dans l'exemple illustré, chaque organe de liaison 38 comprend une première plaquette externe 40, une plaquette intermédiaire 42 et une deuxième plaquette externe 44. Les plaquettes externes et intermédiaire 40, 44 et 42 ont une forme rectangulaire et sont fixées aux pattes 32 ou 34 respectives par des organes de fixation 45 qui sont situés dans les coins des plaquettes 40 à 44. De façon non limitative, les organes de fixation 45 peuvent être des vis ou des rivets, et sont préférentiellement réalisés en un matériau métallique, ou tout au moins électriquement conducteur.

Les plaquettes 40 à 44 sont avantageusement réalisées en un matériau électriquement conducteur, tel qu'un métal, compatible avec le matériau des plaques 12 à 18.

Les pattes 32 et 34, reliées par des organes de liaison 38 respectifs, forment les quatre bornes 46, 48, 50 et 52. Dans l'exemple des figures 2 et 3, les quatre bornes 46 à 52 présentent chacune une forme parallélépipédique.

Avantageusement, les bornes 46 à 52 peuvent présenter des formes différentes, voire spécifiques, afin de faciliter la reconnaissance des bornes lors du raccordement du connecteur 10 à un appareil électrique.

On comprend que la borne 48 est reliée électriquement à la borne 52, tandis que la borne 46 est reliée électriquement à la borne 50.

Les bornes 48 et 52 sont situées de part et d'autre du plan médian P2, dans une configuration dite croisée. Conjointement, les bornes 46 et 50 sont aussi situées de part et d'autre du plan médian P2 dans la configuration croisée.

En variante non représentée, les bornes 48 et 52 peuvent être situées du même côté du plan P2, auquel cas les pattes 32 et 34 de chacune des plaques 12 à 18 sont elles aussi situées d'un même côté du plan P2, dans une configuration dite droite.

Dans l'exemple illustré, les pattes 32 et 34 sont disposées dans leur longueur parallèlement au plan médian P2.

En variante non représentée, une ou plusieurs des pattes 32 ou 34 peut diverger du plan P2 en s'éloignant de la partie centrale 24, tout en conservant la superposition des pattes 32 ou 34, parallèlement à l'axe A24.

Chacune des bornes 46 à 52 comprend, en outre, des alésages de fixation 54. Les alésages 54 sont configurés pour recevoir des organes de raccordement des appareils électriques auxquels le connecteur 10 est raccordé. Ces organes de raccordement, non représentés, peuvent être des câbles ou des barres conductrices qui coopèrent avec les bornes 46 à 52 de manière à raccorder de façon réversible lesdits appareils électriques aux bornes 46 à 52 tout en assurant un bon contact électrique et une bonne tenue mécanique.

La figure 3 est une vue de dessous du connecteur 10 de la figure 2, le connecteur 10 étant représenté raccordé au transformateur 8. Une des bobines du transformateur 8, représenté partiellement et schématiquement, est ici raccordée aux bornes 52 et 50 du connecteur 10. Le transformateur 8 est un exemple d'appareil électrique soumis à une première contrainte de protection IP spécifique, le transformateur 8 étant ici logé dans la zone Z2.

Les bornes 46 et 48 du connecteur 10 sont raccordées à un deuxième appareil électrique, qui n'est pas représenté sur la figure 3, le deuxième appareil électrique étant soumis à une deuxième contrainte de protection IP et étant ici logé dans la zone Z3.

Les zones Z2 et Z3 sont séparées par la cloison étanche 56.

La structure d'isolement 58 comprend, outre les couches intercalaires logées dans les espacements 36, un corps 60, une languette périphérique 62 et un relief de positionnement 64.

La structure d'isolement 58 est réalisée en un matériau électriquement isolant. Dans l'exemple illustré, la structure d'isolement 58 est réalisée en matière plastique polymère. Le corps 60 recouvre entièrement les parties centrales 24 des plaques 12 à 18, assurant conjointement l'isolation électrique des parties centrales 24, l'immobilisation spatiale des plaques 12 à 18 l'une par rapport à l'autre. Autrement dit, le corps 60 reçoit conjointement les parties centrales 24 de chacune des plaques 12 à 18.

Dans l'exemple illustré, les parties centrales 24, superposées les unes sur les autres, ont chacune une forme rectangulaire, tandis que le corps 60 présente une forme de parallélépipède.

Avantageusement, le corps 60 assure une continuité d'isolement électrique et une continuité de maintien mécanique avec les couches intercalaires logées dans chacun des espacements 36.

Avantageusement, le corps 60 et les couches intercalaires logées dans chacun des espacements 36 sont réalisés en un même matériau. Encore plus avantageusement, le corps 60 et les couches intercalaires sont fabriqués par surmoulage des parties centrales 24, seules les pattes 32 et 34 dépassant en saillie du corps 60. Au cours du surmoulage, le matériau isolant du corps 60 est dans un état visqueux et est mis en forme par moulage, de préférence sous pression, autour des parties centrales 40. Le matériau isolant du corps 60 est de préférence un matériau thermoplastique, le surmoulage se faisant à chaud. Au cours du refroidissement, le matériau isolant se solidifie.

En résultat de la fabrication par surmoulage, les parties centrale 24 des plaques 12 à 18 sont noyées dans le corps 60 structure d'isolement 58, seules les pattes de connexion dépassant du corps 60 de la structure d'isolement 58, tel que représenté en figure 3.

De préférence, la structure d'isolement 58 est réalisée d'une seule pièce. Pour cela, au cours de la fabrication par surmoulage les plaques 12 à 18 sont maintenues espacées, tandis que le matériau isolant de la structure d'isolement, à l'état visqueux, pénètre entre les parties centrales 24 des plaques 12 à 18, de manière à former, après refroidissement et solidification du matériau isolant, les couches intercalaires isolantes. Autrement dit, le corps 60 et les couches intercalaires logées dans un des espacements 36 respectifs forment ensemble une pièce monolithique.

La languette périphérique 62 est ménagée en saillie à la périphérie du corps 60 dans un plan parallèle au plan transversal P3.

Dans l'exemple illustré, la languette 62 est à cheval sur la cloison étanche 56.

La languette 62 présente un contour fermé et continu et est configurée pour coopérer avec des organes d'étanchéité et/ou de fixation, de manière à fixer le connecteur 10 à la cloison 56 de façon étanche et réversible. Les organes d'étanchéité et/ou de fixation ne sont pas représentés.

Les bornes 46 et 48 d'une part, 50 et 52 d'autre part, situées de part et d'autre du plan transversal P2 et conjointement de part et d'autre de la cloison 56, sont ainsi séparées de façon étanche par la structure d'isolement 58 coopérant avec les organes d'étanchéité. Autrement dit, les pattes de connexions 32 ou 34 situées du côté de bords opposés 28 ou 30 sont séparées entre elles de façon étanche.

Le relief de positionnement 64, relié au corps 60 et à la languette 62, présente avantageusement une forme asymétrique par rapport au plan transversal P3, permettant un bon positionnement des organes d'étanchéité par rapport à la structure d'isolement 58.

On comprend que le connecteur 10 permet le raccordement de deux appareils électriques situés de part et d'autre d'une cloison 56 étanche. Bien entendu, le connecteur 10 peut être monté sur une cloison non étanche.

Plus généralement, la forme de la structure d'isolement 58 peut ainsi être choisie librement, notamment pour l'intégration du connecteur 10 au reste du véhicule ferroviaire 1, tant que les parties centrales 24 sont entièrement recouvertes par le corps 60 et que seules les pattes 32 et 34 dépassent en saillie du corps 60.

Dans l'exemple illustré, chacun des connecteurs 10 comprend deux paires de plaques 20 et 22, qui sont superposées parallèlement à l'axe A24 et disposées telles que décrit précédemment.

Selon une variante non représentée, seule la première paire 20 est présente, autrement dit seules les plaques 12 et 14 sont présentes.

L'organe de liaison 38 ne comprend alors que les plaquettes externes 40 et 44, et les bornes 46 à 52 ne sont reliées entre elles que par une seule des plaques 12 ou 14 respectives.

Selon une autre variante, trois paires de plaques, analogues aux paires de plaques 20 ou 22, sont superposées.

Les premières plaques de chaque paire de plaques, en particulier les pattes 32 ou 34 des premières plaques de chaque paire de plaques, sont superposées les unes aux autres parallèlement à l'axe A24, tandis que les deuxièmes plaques de chaque paire de plaques, en particulier les pattes 32 ou 34 des deuxièmes plaques de chaque paire de plaques, sont superposées les unes aux autres parallèlement à l'axe A24.

Les pattes 32 ou 34 de chaque première plaque sont décalées latéralement par rapport aux pattes 32 ou 34 de chaque deuxième plaque.

Les organes de liaison 38 comprennent alors deux plaquettes intercalaires du type des plaquettes intercalaires 42, tandis que les bornes 46 à 52 comprennent chacune trois pattes 32 ou 34.

On comprend que selon le nombre de paires de plaques du type des paires 20 et 22 du connecteur 10, la capacité de transport d'énergie électrique du connecteur 10 varie. Il est ainsi aisé de concevoir et fabriquer un connecteur 10 adapté à différentes gammes de puissance électrique.

Dans le domaine de puissances électriques considéré, c'est-à-dire pour des puissances électriques supérieures à quelques dizaines de kilowatts, par exemple au-delà de 50 kW, l'effet de peau commence à être particulièrement sensible pour des fréquences à partir de et supérieures à 10 kHz. Les pattes 32 ou 34 des bornes 46 à 52 étant ménagées chacune dans une plaque, chaque patte 32 ou 34 présente une section transversale avec un ratio périmètre / aire élevé. Autrement dit, les pattes 32 ou 34 présentent une surface élevée en regard de leur volume, ce qui est favorable pour le transport du courant dans des conditions où l'effet de peau tend à être prédominant.

On comprend que plus les plaques 12 à 18 sont fines, et moins le connecteur 10 est soumis aux effets de peau. D'un autre côté, des plaques 12 à 18 trop fines sont mécaniquement fragiles et inadaptées à un environnement industriel tel qu'un véhicule ferroviaire.

En pratique, les plaques 12 à 18 ont une épaisseur comprise entre 0,1 mm et 5 mm, de préférence entre 0,5 mm et 2 mm.

On comprend donc que la géométrie des plaques 12 à 18, notamment l'épaisseur des plaques 12 à 18, peut être choisie pour réduire l'influence de l'effet de peau aux fréquences et aux puissances envisagées dans une application spécifique, tandis que le nombre total de plaques du type des plaques 12 à 18, en particulier le nombre de paires de plaques du type des paires de plaques 20 et 22, est choisi en fonction de la puissance électrique totale devant transiter par le connecteur 10.

Dans l'exemple illustré, le raccordement des bornes 46 à 52 aux bornes des appareils électriques se fait de façon croisée. Les bornes 46 et 50 sont liées entre elles, tandis que les bornes 48 et 52 sont liées entre elles. On comprend que lorsque le connecteur 10 est lié à des appareils électriques en cours de fonctionnement, les lignes de courant traversent les parties centrales 24 de chacune des plaques 12 à 18 dans la diagonale reliant les pattes 32 et 34 respectives.

Les lignes de courant traversant deux parties centrales 24 immédiatement voisines sont donc croisées dans un plan parallèle au plan longitudinal P1, réduisant les effets de proximité tels que les effets d'inductance, réduisant avantageusement l'impédance de la connexion et ainsi les pertes d'énergie.

Dans l'exemple illustré, les parties centrales 24 des plaques 12 à 18 présentent chacune une forme rectangulaire, la forme rectangulaire étant choisie pour réduire les effets de proximité, réduire l'inductance de la connexion et donc l'échauffement du connecteur 10. En variante non représentée, les parties centrales 24 peuvent présenter d'autres formes, choisies par exemple pour réduire les lignes de fuites.

Dans l'exemple illustré, les connecteurs 10 relient les premier et deuxième circuits 4 et 6 au transformateur 8, ces circuits 4 et 6 et le transformateur 8 fonctionnant en courant alternatif à des fréquences où l'effet de peau devient notable, c'est-à-dire à des fréquences supérieures à 10 kHz. Bien entendu, les connecteurs 10 peuvent être utilisés pour raccorder entre eux des appareils électriques fonctionnant à des fréquences inférieures, notamment à basse fréquence, voire en courant continu.

Le mode de réalisation et les variantes mentionnées ci-dessus peuvent être combinés pour générer de nouveaux modes de réalisation de l'invention.

## Revendications

1. Système électrique (1), comprenant un premier appareil électrique (4,6) et un deuxième appareil électrique (8) séparés par une cloison étanche (56, 57) parallèle à un plan transversal (P3), chacun des premier et deuxième appareils comprenant au moins deux bornes de connexion, le premier appareil électrique étant relié électriquement au deuxième appareil électrique par l'intermédiaire d'un connecteur électrique (10), dans lequel :
- le connecteur électrique comporte une paire de plaques (20), comprenant une première plaque (12) électriquement conductrice et une deuxième plaque (14) électriquement conductrice, chaque plaque (12, 14) comportant une partie centrale (24) et deux pattes de connexion (32, 34) :
- les pattes de connexion de chaque plaque s'étendent longitudinalement dans le prolongement de la partie centrale (24) depuis des bords opposés (28, 30) de la partie centrale, les bords opposés étant des portions d'un contour de la partie centrale, les portions du contour étant situées de part et d'autre du plan transversal (P3), les pattes de connexion (32, 34) de chaque plaque (12, 14)étant décalées latéralement l'une par rapport à l'autre,
- les première et deuxième plaques (12, 14) sont empilées l'une sur l'autre, les parties centrales étant superposées et séparées par un espacement (36),
- les pattes de connexion (32, 34) des première et deuxième plaques sont, du côté de chacun desdits bords opposés, décalées latéralement l'une par rapport à l'autre,
- le connecteur électrique (10) comporte, en outre, une structure d'isolement (58) comprenant une couche intercalaire d'un matériau électriquement isolant logé dans un espacement (36) entre les parties centrales (24) des première et deuxième plaques,
**caractérisé en ce que** le connecteur électrique (10) est configuré pour coopérer avec des organes d'étanchéité de manière à traverser la cloison (56, 57) de façon étanche, deux des bornes du premier appareil (4,6) étant connectées à deux des bornes de connexion (46, 48, 50, 52) du connecteur électrique (10) situées de l'un des côtés de la cloison correspondante, tandis que deux des bornes du deuxième appareil sont connectées à deux des bornes de connexion du connecteur électrique situées de l'autre des côtés de cette cloison.

2. Système électrique (10) selon la revendication précédente, dans lequel le connecteur électrique comprend au moins une deuxième paire (22) de plaques, comprenant une troisième plaque (16) et une quatrième plaque (18) électriquement conductrices, chaque plaque (16, 18) de la deuxième paire (22) comportant une partie centrale (24) et deux pattes de connexion (32, 34) :
- les pattes de connexion de chaque plaque (16, 18) s'étendent longitudinalement dans le prolongement de la partie centrale depuis des bords opposés (28, 30) de la partie centrale en étant décalées latéralement l'une par rapport à l'autre,
- les troisième et quatrième plaques sont empilées l'une sur l'autre, les parties centrales étant superposés et séparées par un espacement (36),
- les pattes de connexion (32, 34) des troisième et quatrième plaques (16, 18) sont, du côté de chacun desdits bords opposés, décalées latéralement l'une par rapport à l'autre,
toutes les plaques (12, 14, 16, 18) du connecteur électrique (10) étant empilées les unes sur les autres, toutes les parties centrales (24) étant superposées,
dans lequel la structure d'isolement (58) comprend des couches intercalaires d'un matériau électriquement isolant logées dans chaque espacement (36) entre deux parties centrales immédiatement voisines, et
dans lequel pour deux plaques immédiatement voisines, les pattes de connexion (32, 34) situées du côté d'un des bords opposés (28, 30) sont décalées latéralement l'une par rapport à l'autre.

3. Système électrique (10) selon la revendication précédente, dans lequel toutes les pattes de connexion (32, 34) situées du côté d'un des bords opposés (28, 30) et appartenant à des plaques (12, 14, 16, 18) séparées entre elles par un nombre impair de plaques sont superposées et sont électriquement reliées entre elles par des organes de liaison (38).

4. Système électrique (10) selon l'une quelconque des revendications précédentes, dans lequel la structure d'isolement (58) comprend un corps (60), qui reçoit conjointement les parties centrales (24) de chaque plaque (12, 14, 16, 18), le corps étant réalisé par surmoulage des parties centrales des plaques, en un matériau électriquement isolant, seules les pattes de connexion (32, 34) dépassant en saillie du corps.

5. Système électrique (10) selon l'une quelconque des revendications précédentes, dans lequel la structure d'isolement (58), est réalisée d'une seule pièce, en un matériau polymère.

6. Système électrique (10) selon l'une quelconque des revendications précédentes, dans lequel la structure d'isolement (58) est configurée pour coopérer avec des organes d'étanchéité, de manière à séparer entre elles de façon étanche les pattes de connexions (32, 34) situées du côté de bords opposés (28, 30).

7. Système électrique (10) selon l'une quelconque des revendications précédentes, dans lequel les plaques (12, 14, 16, 18) présentent une structure identique les unes aux autres.

8. Système électrique (10) selon l'une quelconque des revendications précédentes, dans lequel les plaques (12, 14, 16, 18) sont réalisées en métal avec une épaisseur comprise entre 0,1 mm et 5 mm, de préférence entre 0,5 mm et 2 mm, le métal étant de préférence choisi parmi le cuivre et ses alliages ou l'aluminium et ses alliages.

9. Véhicule ferroviaire, comprenant un système électrique (1) conforme à l'une quelconque des revendications précédentes.

## Patentansprüche

1. Elektrisches System (1), umfassend ein erstes elektrisches Gerät (4, 6) und ein zweites elektrisches Gerät (8), die durch eine dichte Trennwand (56, 57) parallel zu einer Querebene (P3) getrennt sind, jedes von dem ersten und dem zweiten Gerät umfassend mindestens zwei Verbindungsanschlüsse, wobei das erste elektrische Gerät über einen elektrischen Verbinder (10) elektrisch mit dem zweiten elektrischen Gerät verbunden ist, wobei:
- der elektrische Verbinder ein Paar Platten (20) umfasst, umfassend eine erste elektrisch leitende Platte (12) und eine zweite elektrisch leitende Platte (14), jede Platte (12, 14) umfassend einen mittleren Abschnitt (24) und zwei Verbindungslaschen (32, 34):
- wobei sich die Verbindungslaschen von jeder Platte in Längsrichtung in der Verlängerung des mittleren Abschnitts (24) von gegenüberliegenden Rändern (28, 30) des mittleren Abschnitts aus erstrecken, wobei die gegenüberliegenden Ränder Abschnitte einer Kontur des mittleren Abschnitts sind, wobei sich die Abschnitte der Kontur auf beiden Seiten der Querebene (P3) befinden, wobei die Verbindungslaschen (32, 34) jeder Platte (12, 14) seitlich zueinander versetzt sind,
- die erste und zweite Platte (12, 14) übereinander gestapelt sind, wobei die mittleren Abschnitte übereinander sind und durch einen Zwischenraum (36) getrennt sind,
- die Verbindungslaschen (32, 34) der ersten und zweiten Platte auf der Seite jeder der gegenüberliegenden Ränder seitlich zueinander versetzt sind,
- der elektrische Verbinder (10) ferner eine Isolationsstruktur (58) aufweist, umfassend eine Zwischenschicht aus einem elektrisch isolierenden Material, das in einem Zwischenraum (36) zwischen den mittlere Abschnitten (24) der ersten und der zweiten Platte untergebracht ist,
**dadurch gekennzeichnet, dass** der elektrische Verbinder (10) konfiguriert ist, um mit Dichtungselementen zusammenzuwirken, um die Trennwand (56, 57) abdichtend zu durchdringen, wobei zwei der Anschlüsse des ersten Geräts (4, 6) mit zwei der Verbindungsanschlüsse (46, 48, 50, 52) des elektrischen Verbinders (10) verbunden sind, die sich auf einer der Seiten der entsprechenden Trennwand befinden, während zwei der Anschlüsse des zweiten Geräts mit zwei der Verbindungsanschlüsse des elektrischen Verbinders verbunden sind, die sich auf der anderen der Seiten dieser Trennwand befinden.

2. Elektrisches System (10) nach dem vorherigen Anspruch, wobei der elektrische Verbinder mindestens ein zweites Paar (22) von Platten umfasst, umfassend eine dritte Platte (16) und eine vierte Platte (18), die elektrisch leitend sind, jede Platte (16, 18) des zweiten Paars (22) umfassend einen mittleren Abschnitt (24) und zwei Verbindungslaschen (32, 34):
- wobei sich die Verbindungslaschen von jeder Platte (16, 18) in Längsrichtung in der Verlängerung des mittleren Abschnitts von gegenüberliegenden Rändern (28, 30) des mittleren Abschnitts erstrecken und dabei seitlich voneinander versetzt sind,
- die dritte und vierte Platte übereinander gestapelt sind, wobei die mittleren Abschnitte übereinander sind und durch einen Zwischenraum (36) getrennt sind,
- die Verbindungslaschen (32, 34) der dritten und der vierten Platte (16, 18) auf der Seite jedes der gegenüberliegenden Ränder seitlich voneinander versetzt sind,
alle Platten (12, 14, 16, 18) des elektrischen Verbinders (10) übereinander gestapelt sind, wobei alle mittleren Abschnitte (24) übereinander sind, wobei die Isolationsstruktur (58) Zwischenschichten aus einem elektrisch isolierenden Material umfasst, die in jedem Zwischenraum (36) zwischen zwei unmittelbar benachbarten mittleren Abschnitten untergebracht sind, und
wobei bei zwei unmittelbar benachbarten Platten die Verbindungslaschen (32, 34), die sich auf der Seite einer der gegenüberliegenden Ränder (28, 30) befinden, seitlich voneinander versetzt sind.

3. Elektrisches System (10) nach dem vorherigen Anspruch, wobei alle Anschlusslaschen (32, 34), die sich auf der Seite eines der gegenüberliegenden Ränder (28, 30) befinden und zu Platten (12, 14, 16, 18) gehören, die durch eine ungerade Anzahl von Platten voneinander getrennt sind, übereinander angeordnet sind und durch Verbindungselemente (38) elektrisch miteinander verbunden sind.

4. Elektrisches System (10) nach einem der vorherigen Ansprüche, wobei die Isolationsstruktur (58) einen Körper (60) umfasst, der gemeinsam die mittleren Abschnitte (24) von jeder Platte (12, 14, 16, 18) aufnimmt, wobei der Körper durch Umspritzen der mittleren Abschnitte der Platten aus einem elektrisch isolierenden Material gefertigt ist, wobei nur die Anschlusslaschen (32, 34) über den Körper hervorstehen.

5. Elektrisches System (10) nach einem der vorherigen Ansprüche, wobei die Isolationsstruktur (58) in einem Stück aus einem Polymermaterial gefertigt ist.

6. Elektrisches System (10) nach einem der vorherigen Ansprüche, wobei die Isolationsstruktur (58) so konfiguriert ist, um mit Dichtungselementen zusammenzuwirken, um die Anschlusslaschen (32, 34), die sich auf der Seite gegenüberliegender Ränder (28, 30) befinden, abdichtend voneinander zu trennen.

7. Elektrisches System (10) nach einem der vorherigen Ansprüche, wobei die Platten (12, 14, 16, 18) eine untereinander identische Struktur aufweisen.

8. Elektrisches System (10) nach einem der vorherigen Ansprüche, wobei die Platten (12, 14, 16, 18) aus Metall mit einer Stärke zwischen 0,1 mm und 5 mm, vorzugsweise zwischen 0,5 mm und 2 mm, hergestellt sind, wobei das Metall vorzugsweise ausgewählt ist aus Kupfer und seinen Legierungen oder Aluminium und seinen Legierungen.

9. Schienenfahrzeug, umfassend ein elektrisches System (1) nach einem der vorherigen Ansprüche.

## Claims

1. An electrical system (1), comprising a first electrical device (4, 6) and a second electrical device (8) separated by a bulkhead (56, 57) parallel to a transverse plane (P3), each of the first and second devices comprising at least two connection terminals, the first electrical device being electrically connected to the second electrical device via an electrical connector (10), wherein:
- the electrical connector comprises a pair of plates (20), including a first electrically conductive plate (12) and a second electrically conductive plate (14), each plate (12, 14) having a central portion (24) and two connection lugs (32, 34):
- the connection lugs of each plate extend longitudinally in line with the central portion (24) from opposite edges (28, 30) of the central portion, the opposite edges being portions of the contour of the central portion, the portions of the contour being located on either side of the transverse plane (P3), the connection lugs (32, 34) of each plate (12, 14) being laterally offset from each other,
- the first and second plates (12, 14) are stacked on top of each other, with the central portions superimposed and separated by a gap (36),
- the connection lugs (32, 34) of the first and second plates are, on the side of each of said opposite edges, laterally offset from each other,
- the electrical connector (10) further comprises an insulation structure (58) comprising an interlayer of electrically insulating material housed in a gap (36) between the central portions (24) of the first and second plates,
**characterised in that** the electrical connector (10) is configured to mate with sealing members so as to pass through the bulkhead (56, 57) in a sealed manner, two of the terminals of the first device (4, 6) being connected to two of the connection terminals (46, 48, 50, 52) of the electrical connector (10) located on one of the sides of the corresponding bulkhead, while two of the terminals of the second device are connected to two of the connection terminals of the electrical connector located on the other of the sides of that bulkhead.

2. The electrical system (10) according to claim 1, wherein the electrical connector comprises at least a second pair (22) of plates, comprising a third plate (16) and a fourth plate (18) that are electrically conductive, each plate (16, 18) of the second pair (22) comprising a central portion (24) and two connection lugs (32, 34):
- the connection lugs of each plate (16, 18) extend longitudinally from opposite edges (28, 30) of the central portion and are laterally offset from each other,
- the third and fourth plates are stacked on top of each other, with the central portions superimposed and separated by a gap (36),
- the connection lugs (32, 34) of the third and fourth plates (16, 18) are, on the side of each of said opposite edges, laterally offset from each other,
all the plates (12, 14, 16, 18) of the electrical connector (10) being stacked on top of each other with all the central portions (24) being superimposed,
wherein the insulation structure (58) comprises interlayers of electrically insulating material housed in each gap (36) between two immediately adjacent central portions, and
wherein for two immediately adjacent plates, the connection lugs (32, 34) on the side of one of the opposite edges (28, 30) are laterally offset from each other.

3. The electrical system (10) according to claim 2, wherein all the connection lugs (32, 34) located on the side of one of the opposite edges (28, 30) and belonging to plates (12, 14, 16, 18) separated from each other by an odd number of plates are superimposed and are electrically connected to each other by connecting members (38).

4. The electrical system (10) according to any one of claims 1 to 3, wherein the insulation structure (58) comprises a body (60) which jointly receives the central portions (24) of each plate (12, 14, 16, 18), the body being made by overmoulding the central portions of the plates in an electrically insulating material, with only the connection lugs (32, 34) projecting from the body.

5. The electrical system (10) according to any one of claims 1 to 4, wherein the insulation structure (58) is made in one piece from a polymeric material.

6. The electrical system (10) according to any one of claims 1 to 5, wherein the insulation structure (58) is configured to mate with sealing members, so as to sealingly separate from each other the connection lugs (32, 34) located on the side of opposite edges (28, 30).

7. The electrical system (10) according to any one of claims 1 to 6, wherein the plates (12, 14, 16, 18) have an identical structure to each other.

8. The electrical system (10) according to any one of claims 1 to 7, wherein the plates (12, 14, 16, 18) are made of metal with a thickness of between 0.1 mm and 5 mm, preferably between 0.5 mm and 2 mm, the metal being preferably selected from copper and its alloys or aluminium and its alloys.

9. A railway vehicle, comprising at least one electrical system (1) according to any one of claims 1 to 8.
